# EUROPEAN PATENT APPLICATION

(11) **EP 4 834 970 A1**
(43) Date of publication of application: **04.11.2026**
(21) Application number: 24913319.0
(22) Date of filing: 22.10.2024
(51) Int. Cl.: C08G 63/672, C08G 63/78, C08K 5/24, C08J 3/12, C08J 5/18

(54) **RESIN COMPOSITION, PREPARATION METHOD FOR SAME, POLYESTER CHIPS, AND POLYESTER FILM**

(30) Priority: 27.12.2023 KR 20230193461
(71) Applicant: Kolon Industries, Inc., Seoul 07793 (KR)
(72) Inventor: KIM, Ho Sub, Seoul 07793 (KR); PARK, No Woo, Seoul 07793 (KR); HONG, Choong Hee, Seoul 07793 (KR); NOH, Kyung Gyu, Seoul 07793 (KR); SHIN, Mi, Seoul 07793 (KR); PARK, Ki Hyun, Seoul 07793 (KR)
(74) Representative: Vossius & Partner Patentanwälte Rechtsanwälte mbB
(86) International application number: PCT/KR2024/016107
(87) International publication number: WO 2025/143481

(57) **Abstract**

Provided are a resin composition including a polyester resin including a moiety derived from a furan dicarboxylic acid-based compound and a moiety derived from an alkylene glycol-based compound, wherein an amount of 2-methyl-1,3-dioxolane, which is an impurity, is 10 ppm or less by weight, a preparation method thereof, a polyester chip, and a polyester film.

## Description

### [Technical Field]

A resin composition, a preparation method thereof, a polyester chip, and a polyester film are disclosed.

### [Background Art]

A polyester resin refers to a polymer resin having an ester functional group in a main chain, and is used for various purposes such as for packaging, for display, and for insulating materials in various industrial fields.

A typical example of the polyester resin includes a polyethylene terephthalate (PET) resin prepared by a reaction of terephthalic acid (TPA) and ethylene glycol (EG).

However, the main raw material of terephthalic acid is para-xylene, and since this is prepared by refining crude oil, the preparation and use of terephthalic acid cause depletion of crude oil resources. In addition, when terephthalic acid is decomposed, carbon dioxide emission increases, which may cause environmental pollution and result in climate changes such as global warming.

Accordingly, attempts have been made to replace terephthalic acid with 2,5-furandicarboxylic acid (FDCA) when preparing a polyester resin. The furan dicarboxylic acid is a biomass-derived material, which may prevent depletion of crude oil resources and minimize environmental pollution, climate change, and the like due to its biodegradability.

### Disclosure

### [Technical Problem]

An embodiment is intended to improve optical properties and color realization properties of a polyester chip and a polyester film by providing a resin composition that can be prepared in an eco-friendly way and can suppress the generation of impurities which are volatile matter.

### [Technical Solution]

In an embodiment, a resin composition includes a polyester resin including a moiety derived from a furan dicarboxylic acid-based compound and a moiety derived from an alkylene glycol-based compound,
wherein an amount of 2-methyl-1,3-dioxolane, which is an impurity, is 10 ppm or less by weight.

In another embodiment, a method for preparing a resin composition includes: preparing a composition including a polyester resin including a moiety derived from a furan dicarboxylic acid-based compound and a moiety derived from an alkylene glycol-based compound, and adjusting an amount of 2-methyl-1,3-dioxolane, which is an impurity generated from the polyester resin by light or heat in the composition, to 10 ppm or less by weight.

In another embodiment, a polyester chip including the aforementioned resin composition is provided.

In another embodiment, a polyester film including the aforementioned resin composition is provided.

### Advantageous Effects

An embodiment may improve optical properties and color realization properties of a polyester chip and a polyester film by providing a resin composition that may be prepared in an eco-friendly way and may suppress the generation of impurities which are volatile matter.

### Best Mode

Hereinafter, specific embodiments will be described in detail so that a person of ordinary skill in the art can easily practice them. However, the present invention may be implemented in various different forms and is not limited to the embodiments described herein.

The terminology used herein is for the purpose of describing exemplary embodiments only and is not intended to be limiting of the present invention. Expressions in the singular include expressions in the plural unless the context clearly indicates otherwise.

When a part "comprises" a certain component, it means that other components are not excluded but other components may be further included unless specifically stated otherwise.

The term "moiety" as used herein refers to a certain portion or unit derived from a specific compound when the specific compound participates in a chemical reaction and is included in a product of the chemical reaction. More specifically, a "moiety" derived from a furan dicarboxylic acid-based compound and a "moiety" derived from an alkylene glycol-based compound mean a portion derived from a furan dicarboxylic acid-based compound and a portion derived from an alkylene glycol-based compound, respectively.

The term "alkyl" as used herein refers to a saturated aliphatic hydrocarbon including linear and branched chains having a specific number of carbon atoms (i.e., the number of carbons) unless otherwise specified. For example, the alkyl may be typically C1 to C10 (i.e., 1 to 10 carbon atoms) alkyl, for example, C1 to C8 alkyl, C1 to C5 alkyl, or C1 to C3 alkyl. Examples of the alkyl include methyl, ethyl, n-propyl, isopropyl, n-butyl, iso-butyl, tert-butyl, n-pentyl, isopentyl, neopentyl, n-hexyl, n-heptyl, n-octyl, and the like.

The description of "alkyl" described above may be identically applied to an "alkyl group" which is a monovalent aliphatic hydrocarbon and a divalent "alkylene."

Meanwhile, the "alkyl group" including the aforementioned "alkyl group" or "alkylene" may be substituted or unsubstituted with an additional substituent, and the description of "substitution" may be applied as described below. For example, the alkyl group may be substituted with one or more halogen atoms up to the total number of hydrogen atoms present on an alkyl moiety. For example, C1 to C4 alkyl may be an alkyl substituted or unsubstituted with a halogen atom, and for example, may be a C1 to C4 alkyl group substituted or unsubstituted with fluorine (F), and representative examples may include trifluoromethyl(-CF₃) or difluoroethyl(-CH₂CHF₂).

Alkyl described as optionally substituted herein may be substituted with one or more substituents, and the substituents are independently selected unless otherwise stated. The total number of substituents is equal to the total number of hydrogen atoms on the alkyl moiety to the extent that such substitution satisfies chemical sense. Optionally substituted alkyl may typically contain 1 to 6 optional substituents, often 1 to 5 optional substituents, preferably 1 to 4 optional substituents, and more preferably 1 to 3 optional substituents.

"Substituted" may mean that at least one hydrogen atom is replaced with a substituent of a halogen atom (F, Cl, Br, I), a hydroxy group or a salt thereof, a C1 to C20 alkoxy group, a nitro group, a cyano group, an amine group, an imino group, an azido group, an amidino group, a hydrazino group, a hydrazono group, a carbonyl group, a carbamyl group, a thiol group or a salt thereof, a thioether group, an ester group, an ether group, a carboxyl group or a salt thereof, a sulfonic acid group or a salt thereof, a phosphoric acid or a salt thereof, a C1 to C10 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof. Or, as an example, the "substituted" may mean that at least one hydrogen atom is replaced with a substituent of a halogen atom, a C1 to C10 alkyl group, a C6 to C20 aryl group, a C3 to C20 heteroaryl group, or a combination thereof.

In the present specification, the CIE1976 L*a*b* color system corresponds to a color space currently standardized worldwide, as defined by the CIE (International Commission on Illumination). In this CIE 1976 L*a*b* color space, the L* value represents lightness in color coordinates and ranges from 0 to 100, where a value of 0 means perfect black and 100 means perfect white. a* represents which of red and green the color is biased toward, and if this value is a positive value, i.e., "+", it is red; if it is a negative value, i.e., "-", it is green. b* represents which of yellow and blue the color is biased toward, and if this value is a positive value, "+", it is yellow; if it is a negative value, i.e., "-", it is blue.

Based on the above definitions, embodiments of the present invention will be described in detail. However, these are presented as examples, and the present invention is not limited thereto, and the present invention is only defined by the scope of the claims to be described later.

### Resin Composition

An embodiment provides a resin composition including a polyester resin including a moiety derived from a furan dicarboxylic acid-based compound and a moiety derived from an alkylene glycol-based compound, an amount of 2-methyl-1,3-dioxolane, which is an impurity, is 10 ppm or less by weight.

In response to demands for development of eco-friendly polyester resins, a manufacturing technology for a polyester resin prepared by a reaction of a furan dicarboxylic acid-based compound, which is a biomass-derived material, and an alkylene glycol-based compound is being developed. Such a polyester resin uses a furan dicarboxylic acid-based compound, which is a biomass-derived material, instead of a terephthalic acid-based compound, which is a petroleum-derived material, as a raw material for preparation, so that depletion of crude oil resources may be prevented, and the prepared polyester resin also exhibits biodegradability, which is advantageous in that it is eco-friendly.

However, when a polyester resin prepared using a furan dicarboxylic acid-based compound as a raw material is prepared into chips and stored, byproducts such as 2-methyl-1,3-dioxolane are easily generated within the chips when exposed to sunlight or high temperatures. Such byproducts are volatile matter and may be inhaled by the human body, and there is a concern that they may adversely affect the optical properties of a film prepared by a post-processing process performed in a high-temperature process. In addition, furan dicarboxylic acid-based compounds used as raw materials for preparing polyester resins have low thermal stability, and thus polyester resins prepared using the same show low lightness due to thermal degradation such as yellowing or browning, which is problematic in that it is disadvantageous in color realization of products using the same.

In an embodiment, physical properties for a resin composition and a polyester film are intended to be improved by suppressing the generation of impurities such as 2-methyl-1,3-dioxolane, which are generated when a polyester resin including a moiety derived from a furan dicarboxylic acid-based compound and a moiety derived from an alkylene glycol-based compound is exposed to sunlight or high temperature, and adjusting the amount to a specific level or less.

A resin composition according to an embodiment includes a polyester resin including a moiety derived from a furan dicarboxylic acid-based compound and a moiety derived from an alkylene glycol-based compound. At this time, the polyester resin has a glycol chain terminal end group such as 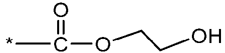 (wherein * represents a bonding position), and when exposed to sunlight or high temperature, a decomposition reaction occurs, which decomposes into a carboxyl chain terminal end group and acetaldehyde. Acetaldehyde reacts with alkylene glycol, which is a raw material of the polyester resin, to easily generate impurities such as 2-methyl-1,3-dioxolane. However, such impurities may be inhaled into the human body, and there is a concern that they may adversely affect optical properties of the polyester resin or adversely affect optical properties or color realization of a polyester film or the like obtained by a post-processing process.

Accordingly, the resin composition according to an embodiment is characterized in that the amount of 2-methyl-1,3-dioxolane, which is an impurity, is adjusted to be as low as 10 ppm or less (including 0 ppm) by weight (i.e., based on the total weight of the resin composition). By satisfying this, it is possible to reduce the generation amount of volatile matter that may be harmful to the human body and prevent degradation of physical properties of the resin composition and the polyester film due to the substance. Through this, it is possible not only to improve optical properties by increasing the purity of the polyester resin in the resin composition itself, but also to contribute to optical properties and color realization of a polyester film manufactured using the same.

In the resin composition, 2-methyl-1,3-dioxolane exists as an impurity, and since it is preferable to contain fewer impurities, the lower limit of the amount is not particularly limited. In particular, since it is preferable that the resin composition does not contain impurities, the case where the amount of 2-methyl-1,3-dioxolane is 0 ppm by weight is also included.

For example, the resin composition may have a amount of 2-methyl-1,3-dioxolane of 5 ppm or less by weight, for example, 4.1 ppm or less, 2.5 ppm or less, 2 ppm or less, or 1.4 ppm or less, and as an example of the lower limit of the amount of 2-methyl-1,3-dioxolane, it may be 0.1 ppm. Within this range, the inherent physical properties of the resin composition may be further improved, and effects of optical properties and color realization of the polyester film may be maximized.

According to an embodiment, the resin composition may further include a hydrazine-based additive. In this case, the hydrazine-based additive may preferentially react with acetaldehyde generated when the polyester resin is decomposed upon exposure to sunlight or high temperature. Due to the participation of the hydrazine-based additive in the reaction with acetaldehyde, it may contribute to the suppression of the generation of 2-methyl-1,3-dioxolane, which is an impurity.

For example, the resin composition may further include, as the hydrazine-based additive described above, an additive represented by Chemical Formula 1A, an additive represented by Chemical Formula 1B, or a combination thereof. When such a hydrazine-based additive is used, the hydrazine-based additive may effectively react with acetaldehyde generated during the decomposition process of the polyester resin, and the amount of 2-methyl-1,3-dioxolane, which is an impurity, may be minimized. Through this, when the hydrazine-based additive is used, thermal degradation such as yellowing or browning of the polyester resin may be effectively suppressed, thereby further improving optical properties and color realization effects of the polyester film.

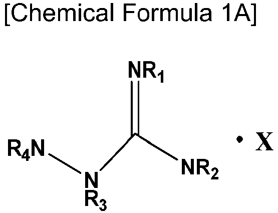

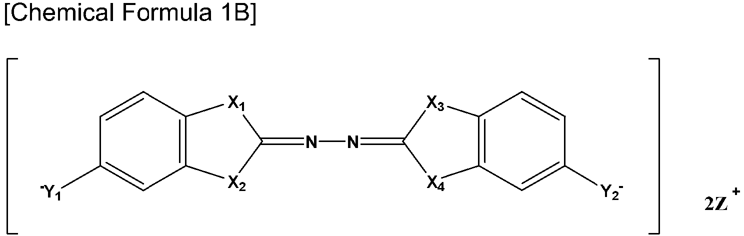

In Chemical Formula 1A, R₁ to R₄ are each independently hydrogen, or a substituted or unsubstituted C1 to C5 alkyl group, X is carbonic acid, hydrochloric acid, sulfuric acid, nitric acid, or a combination thereof, and
in Chemical Formula 1B, X₁ to X₄ are each independently S, O, or NR₅, R₅ is hydrogen, or a substituted or unsubstituted C1 to C5 alkyl group, Y₁⁻ and Y₂⁻are each independently -SO₃⁻, -Cl⁻, or a combination thereof, and Z⁺ is NH₄⁺.

For example, the resin composition may further include, as the hydrazine-based additive described above, an additive represented by Chemical Formula 2A, an additive represented by Chemical Formula 2B, or a combination thereof.

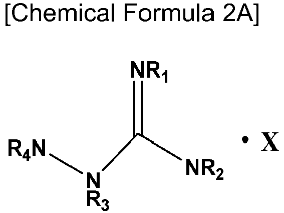

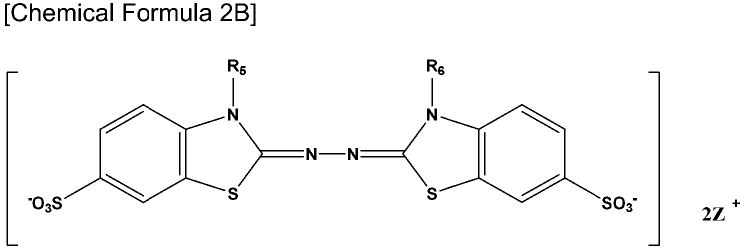

In Chemical Formula 2A, R₁ to R₄ are each independently hydrogen, or a substituted or unsubstituted C1 to C5 alkyl group, X is carbonic acid, hydrochloric acid, sulfuric acid, nitric acid, or a combination thereof, and
in Chemical Formula 2B, Rs and R₆ are each independently hydrogen, or a substituted or unsubstituted C1 to C5 alkyl group, and Z⁺ is NH₄⁺.

For example, the resin composition may further include, as the hydrazine-based additive described above, an additive represented by Chemical Formula 3A, an additive represented by Chemical Formula 3B, or a combination thereof.

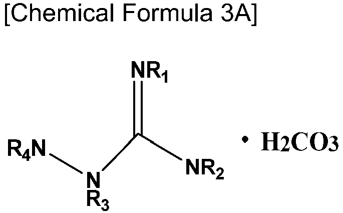

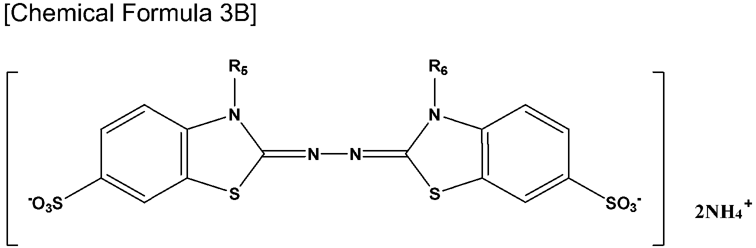

In Chemical Formula 3A, R₁ to R₄ are each independently hydrogen, or a substituted or unsubstituted C1 to C5 alkyl group, and
in Chemical Formula 3B, R₅ and R₆ are each independently hydrogen, or a substituted or unsubstituted C1 to C5 alkyl group.

For example, the resin composition may further include, as the hydrazine-based additive described above, an additive represented by Chemical Formula 4A, an additive represented by Chemical Formula 4B, or a combination thereof.

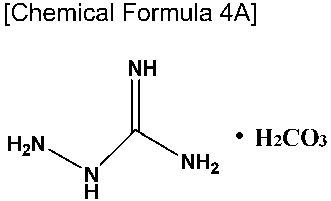

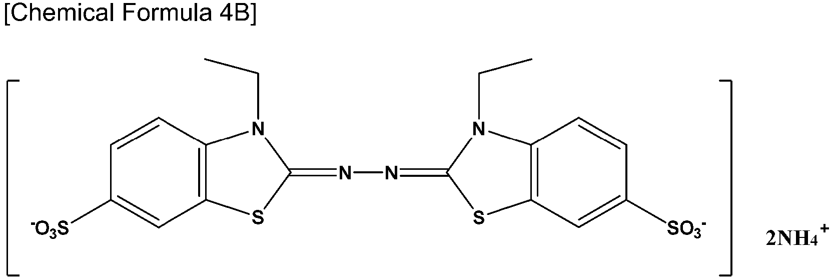

According to an embodiment, the hydrazine-based additive may be included in an amount of 0.001 wt% to 0.01 wt% based on 100 wt% of the resin composition. Within this range, it may be more advantageous in improving optical properties and viscosity properties of the resin composition and securing effects of optical properties and color realization of the polyester film without causing changes in physical properties of the polyester resin by the use of the hydrazine-based additive.

In an embodiment, R₁ to R₄ may be each independently hydrogen, or a substituted or unsubstituted C1 to C3 alkyl group. Alternatively, R₁ to R₄ may be each independently hydrogen, or a substituted or unsubstituted C1 or C2 alkyl group. Alternatively, R₁ to R₄ may be each independently hydrogen, or an unsubstituted C1 or C2 alkyl group.

For example, R₅ and R₆ may be each independently hydrogen, or a substituted or unsubstituted C1 to C3 alkyl group. Alternatively, R₅ and R₆ may be each independently hydrogen, or a substituted or unsubstituted C1 or C2 alkyl group. Alternatively, R₅ and R₆ are each independently hydrogen, or an unsubstituted C1 or C2 alkyl group.

The polyester resin may be prepared through a series of processes including an esterification reaction, a pre-polymerization reaction, and a polycondensation reaction of a furan dicarboxylic acid-based compound and an alkylene glycol-based compound, and all conventional methods may be applied as a specific method for preparing the polyester resin. Hereinafter, the moiety derived from a furan dicarboxylic acid-based compound and the moiety derived from an alkylene glycol-based compound will be described in detail.

### Moiety Derived from Furan Dicarboxylic Acid-based Compound

The polyester resin includes a moiety derived from a furan dicarboxylic acid-based compound (hereinafter, 'moiety derived from a furan dicarboxylic acid-based compound'), and exhibits excellent biodegradability due to the furan dicarboxylic acid-based compound.

The furan dicarboxylic acid-based compound may be represented by Chemical Formula 11A:

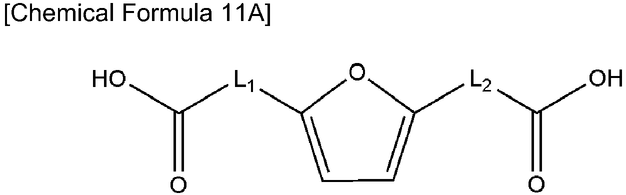

In Chemical Formula 11A, L₁ and L₂ are each independently a single bond, or a substituted or unsubstituted C1 to C10 alkylene.

For example, in Chemical Formula 11A, L₁ and L₂ may be each independently a single bond, or a substituted or unsubstituted C1 to C8 alkylene. Alternatively, in Chemical Formula 11A, L₁ and L₂ may be each independently a single bond, or a substituted or unsubstituted C1 to C5 alkylene. Alternatively, in Chemical Formula 11A, L₁ and L₂ may be each independently a single bond, or a substituted or unsubstituted C1 to C3 alkylene.

As a representative example, the furan dicarboxylic acid-based compound may be 2,5-furandicarboxylic acid, and in this case, L₁ and L₂ in Chemical Formula 11A may both be single bonds.

The moiety derived from the furan dicarboxylic acid-based compound may be represented by Chemical Formula 11B:

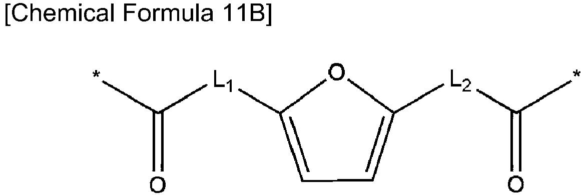

In Chemical Formula 11B, L₁ and L₂ are each independently a single bond, or a substituted or unsubstituted C1 to C10 alkylene, and * represents a bonding position.

For example, in Chemical Formula 11B, L₁ and L₂ may be each independently a single bond, or a substituted or unsubstituted C1 to C8 alkylene. Alternatively, in Chemical Formula 11B, L₁ and L₂ may be each independently a single bond, or a substituted or unsubstituted C1 to C5 alkylene. Alternatively, in Chemical Formula 11B, L₁ and L₂ may be each independently a single bond, or a substituted or unsubstituted C1 to C3 alkylene.

As a representative example, the furan dicarboxylic acid-based compound may be 2,5-furandicarboxylic acid, and in this case, L₁ and L₂ in Chemical Formula 11B may both be single bonds.

### Moiety Derived from Alkylene Glycol-based Compound

The polyester resin includes a moiety derived from an alkylene glycol-based compound (hereinafter, 'moiety derived from an alkylene glycol-based compound'), and exhibits excellent compatibility and elongation properties due to the moiety derived from an alkylene glycol-based compound.

The alkylene glycol-based compound may be represented by Chemical Formula 21A.

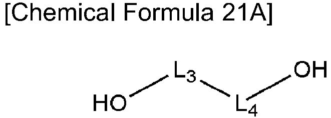

In Chemical Formula 21A, L₃ and L₄ are each independently a substituted or unsubstituted C1 to C10 alkylene.

For example, in Chemical Formula 21A, L₃ and L₄ may be each independently a single bond, or a substituted or unsubstituted C1 to C8 alkylene. Alternatively, in Chemical Formula 21A, L₃ and L₄ may be each independently a single bond, or a substituted or unsubstituted C1 to C5 alkylene. Alternatively, in Chemical Formula 21A, L₃ and L₄ may be each independently a single bond, or a substituted or unsubstituted C1 to C3 alkylene.

As a representative example, the alkylene glycol-based compound may be ethylene glycol, and in this case, in Chemical Formula 21A, L₃ may be a C1 alkylene (i.e., methylene) and L₄ may be a C1 alkylene (i.e., methylene).

The moiety derived from an alkylene glycol-based compound may be represented by Chemical Formula 21B.

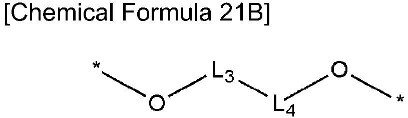

In Chemical Formula 21B, L₃ and L₄ are each independently a substituted or unsubstituted C1 to C10 alkylene, and * represents a bonding position.

For example, in Chemical Formula 21B, L₃ and L₄ may be each independently a substituted or unsubstituted C1 to C8 alkylene. Alternatively, in Chemical Formula 21B, L₃ and L₄ may be each independently a substituted or unsubstituted C1 to C5 alkylene. Alternatively, in Chemical Formula 21B, L₃ and L₄ may be each independently a substituted or unsubstituted C1 to C3 alkylene.

As a representative example, the alkylene glycol-based compound may be ethylene glycol, and in this case, in Chemical Formula 21B, L₃ may be a C1 alkylene (i.e., methylene) and L₄ may be a C1 alkylene (i.e., methylene).

In the polyester resin, a molar ratio of the moiety derived from the furan dicarboxylic acid-based compound to the moiety derived from an alkylene glycol-based compound may be 9:1 to 1:9, 8:2 to 2:8, or 1:1 to 1:2. Within this range, effects of the moiety derived from the furan dicarboxylic acid-based compound and the moiety derived from an alkylene glycol-based compound may be harmoniously secured.

The polyester resin may be an alternating copolymer, a random copolymer, or a block copolymer.

In an embodiment, the polyester resin may be represented by Chemical Formula 31A.

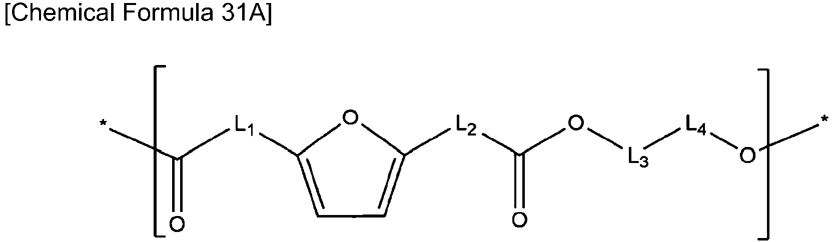

In Chemical Formula 31A, definitions of each substituent are as described above.

For example, the polyester resin may be represented by Chemical Formula 31B:

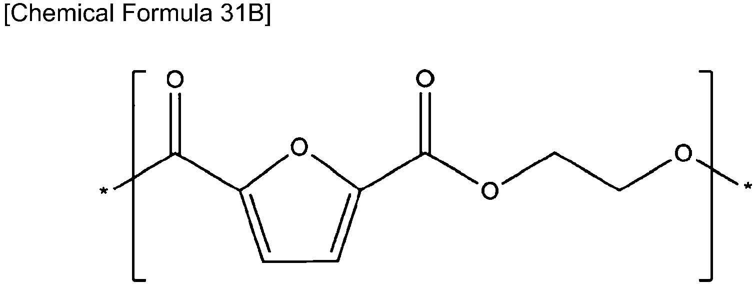

As a representative example, the polyester resin represented by Chemical Formula 31A corresponds to a case where the moiety derived from the furan dicarboxylic acid-based compound is a furan dicarboxylic acid-derived moiety, the moiety derived from the ethylene glycol-based compound is an ethylene glycol-derived moiety, and a molar ratio of the moiety derived from the ethylene glycol-based compound to the moiety derived from the ethylene glycol-based compound is 1:1. For example, the polyester resin may be poly(ethylene furandicarboxylate) (PEF).

The polyester resin may have a number average molecular weight (Mn) of 20,000 g/mol or more, 21,000 g/mol or more, 22,000 g/mol or more, 23,000 g/mol or more, or 24,000 g/mol or more. Also, the polyester resin may have a number average molecular weight (Mn) of 40,000 g/mol or less, 35,000 g/mol or less, or 32,000 g/mol or less. When the number average molecular weight of the polyester resin composition satisfies the above range, suitable viscosity may be secured, and film processing may be easily proceeded.

The polyester resin may have a ratio of weight average molecular weight (Mw) to number average molecular weight (Mn), i.e., molecular weight distribution (MWD), of 1 or more, 1.2 or more, 1.4 or more, or 1.5 or more. In addition, the polyester resin may have a ratio of weight average molecular weight (Mw) to number average molecular weight (Mn), i.e., molecular weight distribution (MWD), of 2.5 or less, 2 or less, 1.95 or less, or 1.92 or less. When this is satisfied, not only process control becomes easy, but also there is an advantage that a defective rate of a product may be lowered due to a uniform molecular weight distribution.

For example, an L* value according to the CIE1976 L*a*b* color system of the resin composition may be 58.0 to 75.5, for example, 58.99 to 75.5, 60.0 to 75.5, or 60.12 to 75.12. As the L* value has a higher value, it may represent a color closer to white. Therefore, when the L* value is satisfied, a polyester chip, a polyester film, and a processed product having excellent transmittance may be obtained.

In an embodiment, a b* value according to the CIE1976 L*a*b* color system of the resin composition may be 7.0 to 15.0, for example, 7.14 to 14.34, or 13.0 to 14.12. As the b* value has a lower value, yellowing becomes lighter and blue becomes darker. Therefore, when the b* value is satisfied, it is possible to obtain a polyester chip and a polyester film exhibiting a light yellow color due to less thermal discoloration.

In an embodiment, the intrinsic viscosity (IV) of the resin composition may be 0.6 dl/g to 0.8 dl/g, for example, 0.64 dl/g to 0.8 dl/g, or 0.64 dl/g to 0.66 dl/g. When this is satisfied, a polyester chip having excellent processability may be obtained. Specifically, if the intrinsic viscosity (IV) is less than 0.6 dl/g, it takes a lot of time for solid-state polymerization additionally proceeded to reach an intrinsic viscosity of 0.8 dl/g or more required for bottle manufacturing, which may adversely affect productivity. Also, if the intrinsic viscosity (IV) exceeds 0.8 dl/g, a large amount may not be discharged to an inner wall of a reactor, which may adversely affect production yield. Therefore, precise control of the intrinsic viscosity (IV) is required.

At this time, the intrinsic viscosity (IV) of the resin composition may be measured at 25 °C using an Ostwald viscometer, and 0.5 g of the resin composition and 10 ml of a solution mixed with phenol and tetrachloroethane in a volume ratio of 1:1 are put into a 20 ml vial and placed in a 100 °C oil bath to completely dissolve, and then the intrinsic viscosity (IV) may be measured at a temperature condition of 25 °C using an Ostwald viscometer.

In the resin composition, other than impurities including 2-methyl-1,3-dioxolane and the like, a balance may be a polyester resin.

### Method for Preparing Resin Composition

An embodiment provides a method for preparing a resin composition which includes: preparing a composition including a polyester resin including a moiety derived from a furan dicarboxylic acid-based compound and a moiety derived from an alkylene glycol-based compound, and adjusting an amount of 2-methyl-1,3-dioxolane, which is an impurity generated from the polyester resin by light or heat in the composition, to 10 ppm or less by weight.

Since the preparation method described above is for a method for preparing a resin composition according to an embodiment, redundant descriptions with respect to the resin composition described above will be omitted, and processes for preparing the resin composition, which is an embodiment, will be described in detail below.

First, a composition comprising a polyester resin including a moiety derived from a furan dicarboxylic acid-based compound and a moiety derived from an alkylene glycol-based compound is prepared. As the polyester resin, a commercially available polyester resin including a moiety derived from a furan dicarboxylic acid-based compound and a moiety derived from an alkylene glycol-based compound may be obtained and used, or one prepared by a method commonly known in the art may be used.

In an embodiment, preparation of the polyester resin may include: performing an esterification reaction of a monomer mixture comprising a furan dicarboxylic acid-based compound and an alkylene glycol-based compound; pre-polymerizing a product of the esterification reaction; and polycondensing a product of the pre-polymerization. Descriptions for the furan dicarboxylic acid-based compound and the alkylene glycol-based compound are the same as described above, and hereinafter, each step of the esterification reaction, the pre-polymerization reaction, and the polycondensation reaction will be described in detail.

In the method for preparing a resin composition according to an embodiment, a monomer mixture including a furan dicarboxylic acid-based compound and an alkylene glycol-based compound may be subjected to an esterification reaction. In this step, an oligomer having a low degree of polymerization may be formed.

The monomer mixture in the esterification reaction step may include 100 to 200 moles of the alkylene glycol-based compound based on 100 moles of the furan dicarboxylic acid-based compound. When the amounts of the furan dicarboxylic acid-based compound and the alkylene glycol-based compound are included in the above range, it is possible to increase a viscosity increase rate in the polycondensation reaction and improve the color of the polymer.

Meanwhile, considering the amount of substance lost or unreacted during the esterification reaction, the alkylene glycol-based compound may be used in an excess of about 120% based on the furan dicarboxylic acid-based compound. Accordingly, when a molar ratio of reactants is adjusted within the above range, a copolymer in which the amount of each moiety is adjusted within the aforementioned range may be formed. More specifically, the alkylene glycol-based compound may be included in an amount of 100 moles or more, 110 moles or more, 115 moles or more, or 120 moles or more, and 200 moles or less, 190 moles or less, 180 moles or less, or 150 moles or less, based on 100 moles of the furan dicarboxylic acid-based compound.

The esterification reaction may be performed under a nitrogen (N₂) atmosphere, at a temperature range of 180 to 220 °C, and a pressure of 1 to 5.5 atm for 1 to 5 hours. For example, the esterification reaction may be performed in a temperature range of 180 °C or higher, 182 °C or higher, 184 °C or higher, or 185 °C or higher, and 220 °C or lower, 210 °C or lower, 200 °C or lower, or 195 °C or lower. Also, the esterification reaction may be performed at 1 atm or more and 5.5 atm or less, 5 atm or less, 3 atm or less, or 1.5 atm or less, and may be performed for 1 hour or more, 1.5 hours or more, or 2 hours or more, and 5 hours or less, 4 hours or less, or 3 hours or less. When the temperature, pressure, reaction time, etc. of the esterification reaction are included in the above range, there are advantages that the reaction yield is high, the reaction is sufficiently proceeded so that physical properties of the finally prepared polyester are improved, and at the same time, the possibility of the appearance of the prepared polyester becoming yellow is lowered.

The esterification reaction may be performed in a batch or continuous manner, and each raw material may be added separately, but as an example, it may be added in the form of a slurry in which a furan-based dicarboxylic acid is mixed with the alkylene glycol.

The esterification reaction may be performed in the presence of an esterification reaction catalyst including a titanium (Ti)-based compound, a tin (Sn)-based compound, an antimony (Sb)-based compound, and the like. In particular, the esterification reaction catalyst may improve the reaction rate from the beginning of the reaction and shorten the time that the polyester resin composition is exposed to heat. The esterification reaction catalyst may be used in an amount of 1 ppm to 100 ppm based on a central atom in the synthesized polyester. When the amount of the esterification reaction catalyst is included in the above range, it is possible to improve appearance physical properties of the prepared polyester and at the same time greatly improve the efficiency of the esterification reaction.

Subsequently, the esterification reaction product may be prepolymerized to prepare an oligomer having a higher degree of polymerization than the esterification reaction product. More specifically, water is generated during the reaction process of the furan dicarboxylic acid-based compound and the alkylene glycol-based compound, and the esterification reaction is terminated when all of the furan dicarboxylic acid-based compound is dissolved and reaches a clear point.

The pre-polymerization may be performed under temperature control conditions (thermal pre-condensation). More specifically, the pre-polymerization may be performed including: a step of raising the temperature until reaching a temperature range of 220 to 280 °C or 220 to 260 °C; and a step of pre-polymerizing the esterification reaction product while maintaining the temperature. In addition, at the time of raising the temperature, the pressure is reduced until reaching 0 to 1 atm or 0 to 0.5 atm, and the reached pressure may also be maintained when the reached temperature is maintained. When the reached temperature, reached pressure, reaction time, etc. during the pre-polymerization are included in each of the ranges, sufficient reaction occurs, physical properties of the finally prepared polyester are improved, and the possibility of yellowing is lowered.

After the pre-polymerization, the pre-polymerized polymer may be subjected to a polycondensation reaction. The polycondensation reaction may be performed at a temperature of 220 to 280 °C or 220 to 260 °C and a pressure of 1 torr or less or 0.4 torr to 0.8 torr for 2 to 6 hours. When the temperature, pressure, reaction time, etc. during the polycondensation are included in each of the ranges, glycol, which is a byproduct of the polycondensation reaction, is effectively removed, so that the final reaction product exhibits an appropriate intrinsic viscosity, and the possibility of the prepared polyester appearance becoming yellow may be lowered.

During the polycondensation, a polycondensation catalyst may be used. The polycondensation catalyst may be added to the product of the esterification reaction before the start of the polycondensation reaction, before the esterification reaction, or during the esterification reaction step. As the polycondensation catalyst, a titanium-based compound, a germanium-based compound, an antimony-based compound, an aluminum-based compound, a tin-based compound, or a mixture thereof may be used. Examples of the titanium-based compound include tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, a titanium dioxide/silicon dioxide copolymer, a titanium dioxide/zirconium dioxide copolymer, and the like. Examples of the germanium-based compound include germanium dioxide (GeO2), germanium tetrachloride (GeCl₄), germanium ethyleneglycoxide, germanium acetate, a copolymer using these, a mixture thereof, and the like.

In the composition, the amount of 2-methyl-1,3-dioxolane, which is an impurity generated from the polyester resin by light or heat, is adjusted to 10 ppm or less by weight.

In an embodiment, the adjusting of the amount of 2-methyl-1,3-dioxolane to 10 ppm or less by weight may be performing a four-stage heat treatment to be described later or adding a hydrazine-based additive during the preparing process of the polyester resin.

In an embodiment, when preparing the polyester resin, the aforementioned esterification reaction, pre-polymerization, and polycondensation reaction may be identically performed, and then a four-stage heat treatment to be described later may be additionally performed on the product of the polycondensation reaction.

For example, the four-stage heat treatment may include a first heat treatment, a second heat treatment, a third heat treatment, and a fourth heat treatment performed at different temperatures. For example, the second heat treatment may be performed at a higher temperature than the first heat treatment, the third heat treatment may be performed at a higher temperature than the second heat treatment, and the fourth heat treatment may be performed at a higher temperature than the third heat treatment. When this is satisfied, the viscosity of the resin composition may be increased, and the amount of 2-methyl-1,3-dioxolane, which is an impurity generated from the polyester resin by light or heat, may be effectively reduced.

In an embodiment, all of the four-stage heat treatments may be performed in a temperature range of 50 °C to 300 °C. For example, the first heat treatment may be performed at 40 °C to 90 °C, the second heat treatment may be performed at 100 °C to 150 °C, the third heat treatment may be performed at 160 °C to 200 °C, and the fourth heat treatment may be performed at 201 °C to 250 °C. Within these ranges, generation of the 2-methyl-1,3-dioxolane, which is an impurity, may be effectively suppressed, and a polyester film having excellent optical properties and color realization may be obtained.

For example, the first heat treatment may include raising the temperature to 40 °C to 90 °C for 30 minutes to 1 hour and then maintaining for 30 minutes to 1 hour, the second heat treatment may include raising the temperature to 100 °C to 150 °C for 30 minutes to 1 hour and then maintaining for 30 minutes to 1 hour, the third heat treatment may include raising the temperature to 160 °C to 200 °C for 30 minutes to 2 hours and then maintaining for 30 minutes to 1 hour, and the fourth heat treatment may include raising the temperature to 201 °C to 250 °C for 30 minutes to 2 hours and then maintaining for 1 hour to 10 hours. Within these ranges, generation of the 2-methyl-1,3-dioxolane, which is an impurity, may be effectively suppressed, and a polyester film having excellent optical properties and color realization may be obtained.

Meanwhile, another embodiment provides a polyester chip including the aforementioned resin composition. In addition, another embodiment provides a polyester film including the aforementioned resin composition.

### Mode for Invention

Hereinafter, Examples and Comparative Examples of the present invention will be described. The following Examples are only an illustration of the present invention, and the present invention is not limited to the following Examples.

### Example 1

In a first autoclave reactor hopper of 10 L capacity, 2,5-furandicarboxylic acid (FDCA, 5.48 mol, 856.9 g) as a furan dicarboxylic acid-based compound and ethylene glycol (EG, 6.58 mol, 408.9 g) as an alkylene glycol-based compound were added in an equivalent ratio of 1:1.2.

Subsequently, a Ti-based chelate catalyst (AC436) as an esterification (ES) catalyst was added in an amount of 10 ppm based on metal, and 10 ppm based on 1 kg of an aminoguanidine bicarbonate complex as an additive represented by Chemical Formula 5A was added, followed by stirring at 120 rpm, and reaction was proceeded for 3.5 hours at a pressure of 2.5 bar (about 2.467 atm), a temperature of 210 °C, and under a nitrogen atmosphere. After the 3.5 hours of reaction, when the pressure was converted to normal pressure and the effluent generated as a byproduct was 90% or more compared to the theoretical effluent, the esterification reaction was terminated.

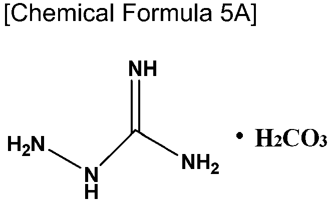

Subsequently, an internal temperature of a reactor was raised for 1 hour to reach a temperature range of 260 °C, and then a vacuum pump was used to step-wise lower the pressure for 1 hour to allow the internal pressure of the reactor to reach a vacuum state of 0.8 torr or less while proceeding with pre-polymerization.

Next, a polycondensation reaction was proceeded at 260 °C under a vacuum state of 0.5 torr or less for 2 to 6 hours, and the product of the polycondensation reaction was dried as soon as a load transmitted to a torque meter of the autoclave reached a desired load, thereby preparing a polyester resin having a number average molecular weight (Mn) of 24,840 g/mol and an MWD of 1.89.

### Example 2

A polyester resin having a number average molecular weight (Mn) of 24,440 g/mol and an MWD of 1.92 was prepared in substantially the same manner as in Example 1, except that 100 ppm of the additive represented by Chemical Formula 5A was added.

### Example 3

A polyester resin having a number average molecular weight (Mn) of 24,750 g/mol and an MWD of 1.82 was prepared in substantially the same manner as in Example 1, except that an additive represented by Chemical Formula 5B was added instead of the additive represented by Chemical Formula 5A.

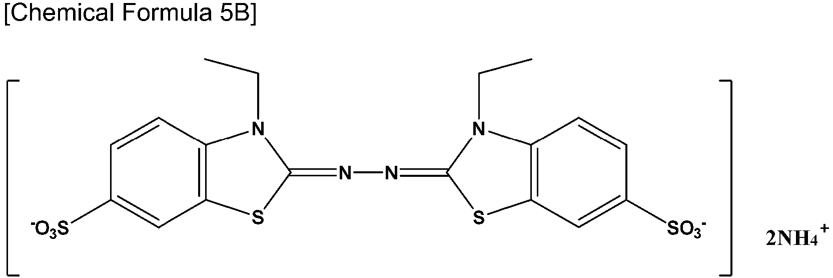

### Example 4

A polyester resin having a number average molecular weight (Mn) of 24,850 g/mol and an MWD of 1.8 was prepared in substantially the same manner as in Example 1, except that 100 ppm of the additive represented by Chemical Formula 5B was added instead of the additive represented by Chemical Formula 5A.

### Example 5

A polyester resin was prepared in substantially the same manner as in Comparative Example 1, except that the result of the polycondensation reaction was placed in a vacuum oven, a degree of vacuum inside the oven was maintained at 0.5 Torr using a vacuum pump, and after performing a first heat treatment (raising temperature to 60 °C for 30 minutes and then maintaining for 1 hour), a second heat treatment (raising the result to 140 °C for 1 hour and then maintaining for 1 hour), a third heat treatment (raising the result to 200 °C for 1 hour and then maintaining for 1 hour), and a fourth heat treatment (raising the result to 210 °C for 1 hour and then maintaining for 6 hours), a polyester resin having a number average molecular weight (Mn) of 32,000 g/mol and an MWD of 1.85 was obtained at room temperature and normal pressure.

### Comparative Example 1

A polyester resin having a number average molecular weight (Mn) of 24,800 g/mol and an MWD of 1.91 was prepared in substantially the same manner as in Example 1, except that aminoguanidine bicarbonate as the additive represented by Chemical Formula 5A was not used.

### Comparative Example 2

A polyester resin having a number average molecular weight (Mn) of 24,340 g/mol and an MWD of 1.71 was prepared in substantially the same manner as in Comparative Example 1, except that 2,5-furandicarboxylic acid (FDCA) as a furan dicarboxylic acid-based compound and ethylene glycol (EG) as an alkylene glycol-based compound were added in an equivalent ratio of 1:1.3 to a first autoclave reactor hopper of 10 L capacity.

### Comparative Example 3

A polyester resin having a number average molecular weight (Mn) of 25,000 g/mol and an MWD of 1.82 was prepared in substantially the same manner as in Comparative Example 1, except that 2,5-furandicarboxylic acid (FDCA) as a furan dicarboxylic acid-based compound and ethylene glycol (EG) as an alkylene glycol-based compound were added in an equivalent ratio of 1:1.5 to a first autoclave reactor hopper of 10 L capacity.

### Comparative Example 4

A polyester resin having a number average molecular weight (Mn) of 24,860 g/mol and an MWD of 1.97 was prepared in substantially the same manner as in Comparative Example 1, except that 50 ppm of the Ti-based chelate catalyst (AC436) was added based on metal.

### Comparative Example 5

A polyester resin having a number average molecular weight (Mn) of 24,760 g/mol and an MWD of 1.95 was prepared in substantially the same manner as in Comparative Example 1, except that 5 ppm of phosphoric acid (PA) as a heat stabilizer based on P was additionally added during the esterification reaction (ES).

### Evaluation Example 1: Evaluation of Physical Properties of Polyester Chip

In Examples 1 to 5 and Comparative Examples 1 to 5, a valve at a lower part of a reactor for each polycondensation reaction was opened to pull out the resin composition including the prepared polyester resin in a yarn form, and after cooling it in a water bath, the yarn-form resin composition was placed between rollers using a pelletizer and operated, and cut with a cutter at the end to prepare each polyester chip having a constant width and thickness. Physical properties of each polyester chip prepared in this way were evaluated in the following manner and are shown in Table 1.

### Evaluation of Amount of 2-Methyl-1,3-dioxolane

2-methyl-1,3-dioxolane (manufacturer: Sigma-Aldrich, product number: 292206) was prepared, and a calibration curve for each amount was plotted by GC-MS at concentrations of 1 ppm, 10 ppm, 50 ppm, and 100 ppm of 2-methyl-1,3-dioxolane in chloroform, and at this time, reliability was adjusted to 99.95% or more.

0.2 g of each polyester chip prepared from Examples 1 to 5 and Comparative Examples 1 to 5 was measured by an ASTM F 2013 measurement method, 2-methyl-1,3-dioxolane was measured at the same retention time as the calibration curve, and the amounta of 2-methyl-1,3-dioxolane in the polyester chip was measured from a difference in area from the calibration curve for each amount and is shown in Table 1.

### Colorimeter Evaluation

More than half of a capacity of a container dedicated to chip measurement was filled with polyester chips and the balance was maintained with air, and then L* and b* values were measured using a chip colorimeter from Nippon Denshoku (sa-4000), and the values are shown in Table 1.

### Evaluation of Intrinsic Viscosity (IV)

0.5 g of polyester chips and 10 ml of a solvent phenol:tetrachloroethane 1:1 (v:v) solution were completely dissolved in a 20 ml vial in a 100 °C oil bath, and then the intrinsic viscosity (IV) was measured at 25 °C using an Ostwald viscometer and is shown in Table 1.

**(Table 1)**

| | Chip physical properties | | | |
|---|---|---|---|---|
| | Amount of 2-methyl-1,3-dioxolane (ppm) | L* | b* | Intrinsic viscosity (IV) |
| Example 1 | 1.4 | 61.09 | 13.49 | 0.651 |
| Example 2 | 1 | 61.45 | 13.12 | 0.642 |
| Example 3 | 1.1 | 60.49 | 14.09 | 0.649 |
| Example 4 | 0.8 | 60.12 | 14.12 | 0.651 |
| Example 5 | 2.4 | 75.12 | 7.14 | 0.8 |
| Comparative Example 1 | 12 | 59.12 | 14.29 | 0.65 |
| Comparative Example 2 | 13 | 58.12 | 15.13 | 0.64 |
| Comparative Example 3 | 14 | 58.07 | 16.12 | 0.654 |
| Comparative Example 4 | 15 | 58.14 | 15.19 | 0.651 |
| Comparative Example 5 | 12 | 58.49 | 15.29 | 0.649 |

Referring to Table 1, in the case of Examples 1 to 5, the amount of 2-methyl-1,3-dioxolane was 10 ppm or less, through which it can be confirmed that the transmittance is excellent as the L* value is high compared to Comparative Examples 1 to 5, and thermal discoloration is small as the b* value is low, and thus the polyester chip color is improved.

### Evaluation Example 2: Evaluation of Physical Properties of Polyester Film

In Evaluation Example 1, a polyester film was manufactured using each polyester chip prepared from Examples 1 to 5 and Comparative Examples 1 to 5. Specifically, each polyester chip was melted in an extruder at 180 °C to 260 °C, and then the melt was extruded through a die to be formed into a sheet form and rapidly cooled. The obtained sheet was stretched 3.0 times in a machine direction (MD) and then stretched 3.7 times in a transverse direction (TD), and for the stretched film, in order to impart dimensional stability, it was heat-set at 120 °C to 160 °C under tension to prepare a biaxially oriented polyester film.

### Evaluation of Y Transmittance (D65)

For the polyester films prepared from Examples 1 to 5 and Comparative Examples 1 to 5, specimens were prepared by cutting each into a size of 10 cm × 10 cm (longitudinal length × transverse length). For the specimens, a parallel transmittance and a diffuse transmittance of the specimens were measured by an ASTM D1003-97 measurement method using a CM-3600A measuring instrument from Minolta. The transmittance was defined as a sum of the parallel transmittance and the diffuse transmittance, and the transmittance was obtained and is shown in Table 2.

### Evaluation of Yellow Index and b* Value

For the polyester films prepared from Examples 1 to 5 and Comparative Examples 1 to 5, specimens were prepared by cutting each into a size of 10 cm × 10 cm (longitudinal length × transverse length). For the specimens, the yellow index and b* value of the specimens were measured according to an ASTM E313 method and are shown in Table 2.

### Evaluation of Haze

For the polyester films prepared from Examples 1 to 5 and Comparative Examples 1 to 5, the haze of the film was measured with a Haze meter, which is an equipment of Murakami Color Research Lab. (hm-150), and is shown in Table 2.

**(Table 2)**

| | Physical properties after processing of polyester film | | | |
|---|---|---|---|---|
| | Y (D65) | Yellow index | b* | Haze |
| Example 1 | 92.51 | 0.51 | 0.61 | 0.4 |
| Example 2 | 92.14 | 0.49 | 0.59 | 0.5 |
| Example 3 | 92.49 | 0.46 | 0.58 | 0.4 |
| Example 4 | 92.12 | 0.45 | 0.54 | 0.3 |
| Example 5 | 90.55 | 0.61 | 0.71 | 0.5 |
| Comparative Example 1 | 89.11 | 1.51 | 1.45 | 1.1 |
| Comparative Example 2 | 89.01 | 1.59 | 1.51 | 1.0 |
| Comparative Example 3 | 88.99 | 1.61 | 1.59 | 1.0 |
| Comparative Example 4 | 88.79 | 1.71 | 1.68 | 1.1 |
| Comparative Example 5 | 89.21 | 1.49 | 1.41 | 0.9 |

Referring to Table 2, it can be confirmed that in the case of Examples 1 to 5, compared with Comparative Examples 1 to 5, the transmittance (D65) is high and thus the transmittance is excellent, the yellow index and b* value are low and thus the thermal discoloration is small, and the haze is low, and thus all have excellent optical properties.

Preferred embodiments have been described in detail above, but the scope of rights of the present invention is not limited thereto, and various variations and improvements of those skilled in the art using the basic concept defined in the following claims also belong to the scope of rights of the present invention.

## Claims

1. A resin composition, comprising
a polyester resin comprising a moiety derived from a furan dicarboxylic acid-based compound and a moiety derived from an alkylene glycol-based compound,
wherein an amount of 2-methyl-1,3-dioxolane, which is an impurity, is 10 ppm or less by weight.

2. A resin composition, having a b* value of 7.0 to 15.0 according to the CIE1976 L*a*b* color system.

3. The resin composition of claim 1, having an L* value of 58.0 to 75.5 according to the CIE1976 L*a*b* color system.

4. The resin composition of claim 1, further comprising a hydrazine-based additive.

5. The resin composition of claim 1, further comprising an additive represented by Chemical Formula 1A, an additive represented by Chemical Formula 1B, or a combination thereof: 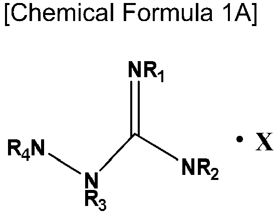 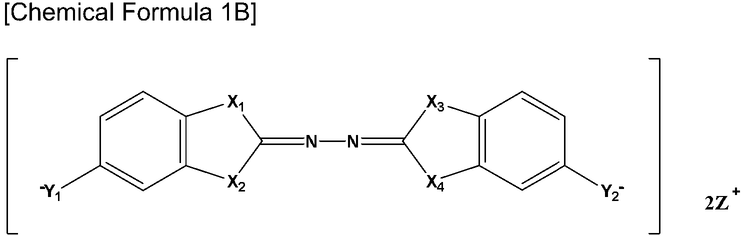
wherein, in Chemical Formula 1A, R₁ to R₄ are each independently hydrogen, or a substituted or unsubstituted C1 to C5 alkyl group, and X is carbonic acid, hydrochloric acid, sulfuric acid, nitric acid, or a combination thereof, and
in Chemical Formula 1B, X₁ to X₄ are each independently S, O, or NR₅, R₅ is hydrogen, or a substituted or unsubstituted C1 to C5 alkyl group, Y₁⁻ and Y₂⁻are each independently -SO₃⁻, -Cl⁻, or a combination thereof, and Z⁺ is NH₄⁺.

6. The resin composition of claim 1, further comprising an additive represented by Chemical Formula 2A, an additive represented by Chemical Formula 2B, or a combination thereof: 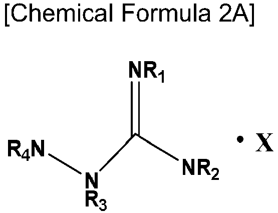 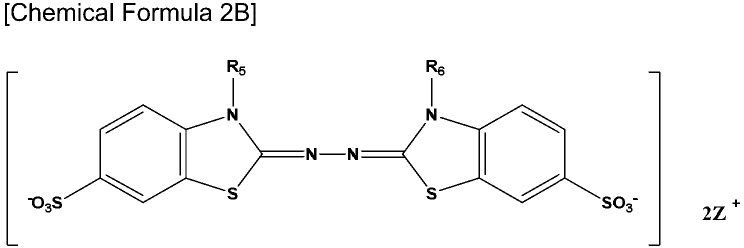
wherein, in Chemical Formula 2A, R₁ to R₄ are each independently hydrogen, or a substituted or unsubstituted C1 to C5 alkyl group, X is carbonic acid, hydrochloric acid, sulfuric acid, nitric acid, or a combination thereof, and
in Chemical Formula 2B, R₅ and R₆ are each independently hydrogen, or a substituted or unsubstituted C1 to C5 alkyl group, and Z⁺ is NH₄⁺.

7. The resin composition of claim 1, further comprising an additive represented by Chemical Formula 3A, an additive represented by Chemical Formula 3B, or a combination thereof: 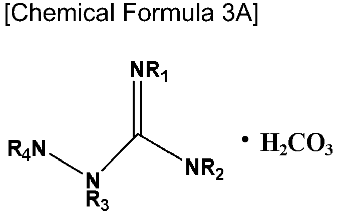 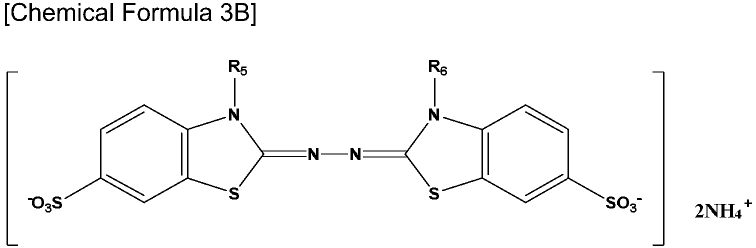
wherein, in Chemical Formula 3A, R₁ to R₄ are each independently hydrogen, or a substituted or unsubstituted C1 to C5 alkyl group, and
and in Chemical Formula 3B, R₅ and R₆ are each independently hydrogen, or a substituted or unsubstituted C1 to C5 alkyl group.

8. The resin composition of claim 1, further comprising an additive represented by Chemical Formula 4A, an additive represented by Chemical Formula 4B, or a combination thereof:

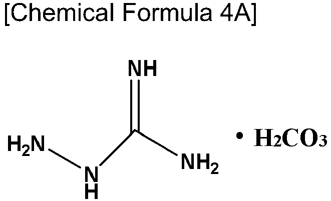

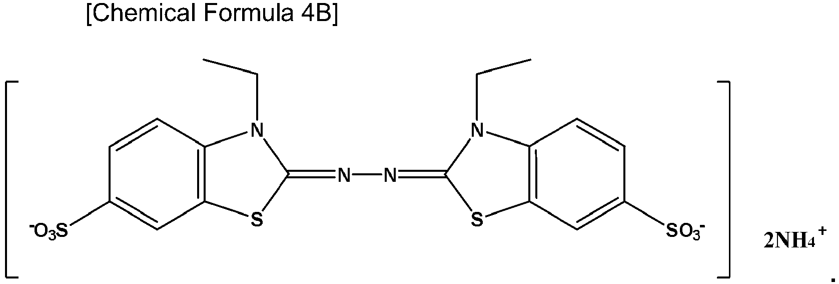

9. The resin composition of claim 1, wherein
an amount of 2-methyl-1,3-dioxolane is 5 ppm or less by weight.

10. The resin composition of claim 1, wherein
an amount of 2-methyl-1,3-dioxolane is 2 ppm or less by weight.

11. A method for preparing a resin composition, comprising
preparing a composition comprising a polyester resin comprising a moiety derived from a furan dicarboxylic acid-based compound and a moiety derived from an alkylene glycol-based compound, and
adjusting an amount of 2-methyl-1,3-dioxolane, which is an impurity generated from the polyester resin by light or heat in the composition, to 10 ppm or less by weight.

12. The method for preparing the resin composition of claim 11, wherein
wherein the adjusting of the amount of 2-methyl-1,3-dioxolane to 10 ppm or less by weight comprises performing a four-stage heat treatment or adding a hydrazine-based additive during the preparing process of the polyester resin.

13. The method for preparing the resin composition of claim 12, wherein
the four-stage heat treatment comprises a first heat treatment, a second heat treatment, a third heat treatment, and a fourth heat treatment performed at different temperatures,
wherein the first heat treatment is performed at 40 °C to 90 °C,
the second heat treatment is performed at 100 °C to 150 °C,
the third heat treatment is performed at 160 °C to 200 °C, and
the fourth heat treatment is performed at 201 °C to 250 °C.

14. A polyester chip comprising the resin composition of claim 1.

15. A polyester film comprising the resin composition of claim 1.
